# EUROPÄISCHE PATENTANMELDUNG

(11) **EP 1 182 384 A2**
(43) Veröffentlichungstag der Anmeldung: **27.02.2002**
(21) Anmeldenummer: 01116155.1
(22) Anmeldetag: 04.07.2001
(51) Int. Cl.: F16J 9/20

(54) **Ölabstreifkolbenring**

(30) Priorität: 25.08.2000 DE 10041803
(71) Anmelder: Federal-Mogul Burscheid GmbH, 51399 Burscheid (DE)
(72) Erfinder: Katsaounis, Evangelos, 51379 Leverkusen (DE); Solia, Mario, 50937 Köln (DE)

(57) **Zusammenfassung**

Ölabstreifkolbenring (1) für Verbrennungskraftmaschinen, mit mindestens einem an der Zylinderwand anliegenden Steg (2) und mit über den Umfang verteilt angeordneten, die radiale Wandstärke reduzierenden Ausnehmungen (4), die von der Ringinnenseite (3) sich radial in Richtung der äußeren Umfangsfläche erstrecken, wobei die Ausnehmungen durch ineinander übergehende unterschiedliche Konturen aufweisende Bereiche (5,6) gebildet werden und der ringinnenseitig vorgesehene Bereich (5) eine geringere Schlitzfläche als der sich daran anschließende Bereich (6) aufweist.

## Beschreibung

Die Erfindung betrifft einen Ölabstreifkolbenring für Verbrennungskraftmaschinen, mit mindestens einem an der Zylinderwand anliegenden Steg und über den Umfang verteilt angeordneten, die radiale Wandstärke schwächenden Ausnehmungen, die sich von der Ringinnenseite radial in Richtung der äußeren Umfangsfläche erstrecken.

Die DE-A 198 08 483 betrifft einen Ölabstreifkolbenring für Verbrennungskraftmaschinen, mit über den Umfang verteilt angeordneten Schlitzen, die sich axial durch den gesamten Ringquerschnitt erstrecken und Ölabflußöffnungen bilden, wobei gleichzeitig die Flexibilität des Ringes erhöht wird.

Durch die US-A 3 378 268 ist ein mehrteiliger Ölabstreifkolbenring bekannt geworden, der zwei an der Zylinderwand anliegende Stege beinhaltet und der über den Umfang verteilt angeordnete, die radiale Wandstärke schwächende, Ausnehmungen aufweist, die sich von der inneren in Richtung der äußeren Umfangsfläche erstrecken. Die Ausnehmungen sind hierbei im Querschnitt dreieckförmig vorgesehen, so daß in Analogie zur DE-A 198 08 483 eher von einem Schlitz gesprochen werden kann. Diese, sich vom Querschnitt her verjüngenden Schlitze dienen dazu, den Ölablauf zu beschleunigen, wobei ein Hinweis auf eine Erhöhung der Ringflexibilität nicht gegeben ist.

Eine zur DE-A 198 08 483 äquivalente Bauform ist durch die DE-A 11 01 070 bekannt geworden. Vom Innenumfang des Ringes ausgehend, erstrecken sich Einschnitte in Richtung der äußeren Umfangsfläche, wodurch das Widerstandsmoment des Ringes begrenzt werden kann.

Nachteilig bei den im Stand der Technik behandelten Schlitzen ist anzumerken, daß eine potentielle Gefahr der Girlandenbildung beim Wickeln von aus Blech geformten Ölabstreifkolbenringen gegeben sein kann.

Die maßgebliche Einflußgröße für das Formfüllvermögen bei Ölabstreifkolbenringen ist neben der Tangentialkraft das radiale Flächenträgheitsmoment. Dieses hängt in der dritten Potenz von der radialen Wandstärke a ab. Wird die Ringstärke beispielsweise durch Einbringung zuvieler Schlitze zu sehr geschwächt, ist eine einfache Montierbarkeit des Ringes in den Motor nicht mehr gegeben.

Der Erfindung liegt die Aufgabe zugrunde, bei Optimierung der Flexibilität eines gattungsgemäßen Kolbenringes und Senkung der Herstellkosten, die Montierbarkeit des Ölabstreifkolbenringes einfach zu halten, wobei desweiteren eine Reduzierung der Spannungen im Bereich der geringsten radialen Wandstärke erzielt werden soll. Darüber hinaus soll ein, insbesondere federgespannter Ölabstreifkolbenring mit hohem Formfüllvermögen gebildet werden.

Diese Aufgabe wird dadurch gelöst, daß die Ausnehmungen durch ineinander übergehende, unterschiedliche Konturen aufweisende Bereiche, gebildet sind, wobei der ringinnenseitig vorgesehene Bereich eine geringere Schlitzfläche als der sich daran anschließende Bereich aufweist.

Vorteilhafte Weiterbildungen des Erfindungsgegenstandes sind den Unteransprüchen zu entnehmen.

Durch die gezielte geometrische Anordnung bzw. Ausbildung der erfindungsgemäßen Ausnehmungen auf der Ringrückenseite kann die Flexibilität des Ölabstreifringes bei gleichzeitig hohem Formfüllvermögen und guter Flankenabdichtung wesentlich erhöht werden. Die bei Schlitzen gegebene Girlandenbildung beim Wickeln wird minimiert und es wird eine Reduzierung der Spannung im Bereich der geringsten radialen Wandstärke erzielt.

Eine bevorzugte Ausführungsform ist darin zu sehen, Bereiche zu erzeugen, die etwa pilzartig ausgebildet sind, wobei die Längsachsen der Bereiche etwa senkrecht aufeinander stehen und sich etwa auf halber Höhe des mit der größereren Schlitzfläche versehenen Bereiches schneiden. Die Kantenabstände der etwa parallel verlaufenden Begrenzungskanten der einzelnen Bereiche sind so vorgesehen, daß der ringinnenseitige etwa schlitzartig ausgebildete Bereich einen wesentlich kleineren Abstand als der sich daran anschließende Bereich aufweist.

Der Seitenabstand des von der Schlitzfläche her geringer dimensionierten Bereiches ist vorzugsweise so ausgebildet, daß er kleiner ist als der den Stoß des Ölabstreifkolbenringes definierende Kantenabstand. Durch diese Maßnahme können die Ölabstreifringe für weitere Fertigungsabläufe stoßsortiert werden, ohne daß die Gefahr gegeben ist, daß bei der Sortierung der Ring mit dem kleineren Abstandsbereich der Ausnehmung auf der Sortierwelle zur Auflage kommt.

Der Erfindungsgegenstand ist anhand einer Prinzipskizze dargestellt und wird wie folgt erläutert.

Dargestellt ist ein Teilausschnitt eines Ölabstreifkolbenringes 1 bestehend aus einem aus Blech gestanzten Formteil. Die äußere Umfangsfläche 2 begründet einen an der nicht weiter dargestellten Zylinderwand anliegenden Steg. Von der inneren Umfangsfläche 3 ausgehend sind, in Umfangsrichtung gesehen, Ausnehmungen 4 vorgesehen, die in diesem Beispiel durch Stanzen erzeugt sein sollen. Die Ausnehmungen 4 werden gebildet durch Bereiche 5,6, wobei der ringinnenseitige Bereich 5 einen Schlitz definiert und der darin übergehende Bereich 6 als Ellipse mit vorgebbaren Radien ausgebildet ist. Andersartige Schlitzformen des Bereiches 6 sind ebenfalls denkbar. Die einander gegenüberliegenden Kanten 7,8 des Bereiches 5 begründen einen Abstand b. Die etwa parallel dazu verlaufenden Begrenzungskanten 9,10 des Bereiches 6 definieren einen Abstand a, wobei erfindungsgemäß b < a ist. Die Bereiche 5,6 der Ausnehmungen 4 bilden somit eine etwa pilzartige Kontur, wobei die Längsachsen 11,12 der Bereiche 5,6 etwa senkrecht aufeinander stehen und sich etwa auf halber Höhe des Bereiches 6 schneiden. Durch die erfindungsgemäße Bauform wird die Flexibilität des Ölabstreifkolbenringes 1 bei einfacher Formgebung und Montierbarkeit erhöht. Gleichzeitig wird ein hohes Formfüllvermögen bei guter Flankenabdichtung herbeigeführt. Die durch das Wickeln bedingte Polygonform kann ebenfalls reduziert werden.

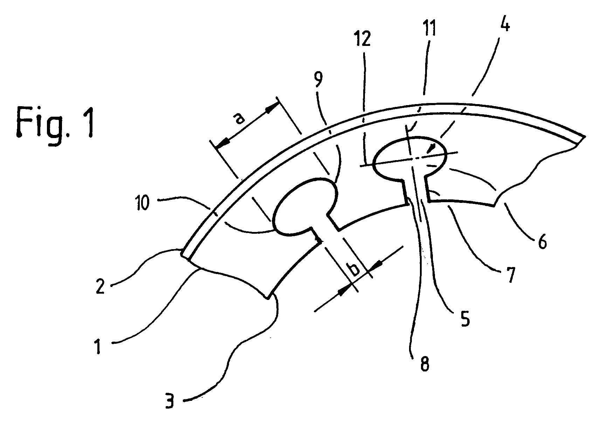

## Patentansprüche

1. Ölabstreifkolbenring für Verbrennungskraftmaschinen, mit mindestens einem an der Zylinderwand anliegenden Steg (2) und mit über den Umfang verteilt angeordneten, die radiale Wandstärke reduzierenden Ausnehmungen (4), die von der Ringinnenseite (3) sich radial in Richtung der äußeren Umfangsfläche erstrecken, **dadurch gekennzeichnet, daß** die Ausnehmungen (4) durch ineinander übergehende unterschiedliche Konturen aufweisende Bereiche (5,6) gebildet sind, wobei der ringinnenseitig vorgesehene Bereich (5) eine geringere Schlitzfläche als der sich daran anschließende Bereich (6) aufweist.

2. Ölabstreifkolbenring nach Anspruch 1, **dadurch gekennzeichnet, daß** die Kontur der Ausnehmungen (4) etwa pilzartig ausgebildet ist, wobei der Kantenabstand der Bereiche der Formel b < a genügt.

3. Ölabstreifkolbenring nach Anspruch 1 oder 2, **dadurch gekennzeichnet, daß** der ringinnenseitige Bereich (5) durch einen Schlitz mit etwa parallel zueinander verlaufenden Begrenzungskanten (7,8) gebildet wird.

4. Ölabstreifkolbenring nach einem der Ansprüche 1 bis 3, **dadurch gekennzeichnet, daß** der sich an den ringinnenseitigen Bereich (5) radial anschließende Bereich (6) eine im wesentlichen gerundete Schlitzfläche beinhaltet.

5. Ölabstreifkolbenring nach einem der Ansprüche 1 bis 4, **dadurch gekennzeichnet, daß** der sich an den ringinnenseitigen Bereich (5) radial anschließende Bereich (6) eine etwa elliptische Schlitzfläche beinhaltet.

6. Ölabstreifkolbenring nach einem der Ansprüche 1 bis 5, **dadurch gekennzeichnet, daß** die Längsachsen (11,12) der Bereiche (5,6) etwa 90° zueinander versetzt vorgesehen sind, und daß der Schnittpunkt der Längsachsen (11,12) etwa auf halber Höhe der Schlitzfläche des größeren Bereiches (6) liegt.

7. Ölabstreifkolbenring nach einem der Ansprüche 1 bis 6, **dadurch gekennzeichnet, daß** der Kantenabstand (b) geringer als der Stoßbereich des Ölabstreifkolbenringes dimensioniert ist.
